# EUROPEAN PATENT APPLICATION

(11) **EP 2 216 528 A1**
(43) Date of publication of application: **11.08.2010**
(21) Application number: 08854928.2
(22) Date of filing: 28.11.2008
(51) Int. Cl.: F02B 29/08, F02B 27/00, F02M 35/104

(54) **INTAKE SYSTEM FOR MULTICYLINDER INTERNAL COMBUSTION ENGINE**

(30) Priority: 28.11.2007 JP 2007307083
(71) Applicant: Toyota Jidosha Kabushiki Kaisha, Toyota-shi, Aichi-ken 471-8571 (JP)
(72) Inventor: YOEDA, Keiji, Toyota-shi Aichi 471-8571 (JP); ITO, Yasushi, Toyota-shi Aichi 471-8571 (JP); KATSUMATA, Shouji, Toyota-shi Aichi 471-8571 (JP); NISHIDA, Hideyuki, Toyota-shi Aichi 471-8571 (JP); TANNO, Shiro, Toyota-shi Aichi 471-8571 (JP)
(74) Representative: TBK-Patent
(86) International application number: PCT/JP2008/071692
(87) International publication number: WO 2009/069766

(57) **Abstract**

An intake passage 10 in an internal combustion engine 1 includes an independent passage 20 disposed in each of cylinders 2, and a common passage 21 connected to the independent passage 20, to be commonly used by the different cylinders 2. A cross-sectional area of the independent passage 20 disposed in the cylinder 2 having the long passage length from an intake valve 12 to a surge tank 16 is made greater than that of the independent passage 20 disposed in the cylinder 2 having the short passage length.

## Description

### Technical Field

The present invention relates to an intake device for a multi-cylinder internal combustion engine, in which an intake control valve is interposed between an intake valve and a surge tank.

### Background Art

As a method for supercharging an intake air in an internal combustion engine has been known impulse supercharging, in which a negative pressure inside of a cylinder is increased by utilizing the descent of a piston at an intake stroke in a state in which an intake control valve interposed between an intake valve and a surge tank is kept closed, and then, an intake pressure wave is caused inside of an intake passage by rapidly opening the intake control valve before transition to a compression stroke, thus aggressively utilizing an inertia supercharging effect.

In general, when a timing at which a negative pressure generated inside of a cylinder at the beginning of an intake stroke is reversed to a positive pressure by an inertia effect is synchronous with a timing at which an intake valve is closed in an internal combustion engine, it has been known that the most efficient inertia supercharging effect can be produced. In view of this, an intake system in the internal combustion engine is designed such that a highly efficient inertia supercharging effect can be produced in synchronism of the timings at an engine speed at which a greatest torque is to be achieved. As a consequence, if the engine speed of the internal combustion engine is out of an engine speed of a design basis, the inertia supercharging effect cannot be sufficiently produced, thereby decreasing an output torque. For example, a valve opening time of the intake valve, that is, an intake stroke time becomes longer than a pressure reverse time in a region of an engine speed lower than the engine speed of the basis, and therefore, the intake valve is inconveniently closed after a timing at which the pressure inside of the cylinder becomes greatest.

In the case where the impulse supercharging is applied to the above-described internal combustion engine, the intake stroke is started while maintaining the intake control valve in a valve closed state in the region of the engine speed lower than that of the above-described design basis, and then, the intake control valve is opened, thereby a start timing of the intake stroke can be substantially delayed. A longer intake stroke time than a pressure reverse time in the low engine speed region becomes shorter, and consequently, the inertia supercharging effect can be utilized in a wider range.

Suppression of variations in inertia supercharging effect per cylinder so as to achieve a uniform intake air filling efficiency per cylinder is ideal in the case where impulse supercharging is applied to a multi-cylinderinternalcombustion engine. For example, there is an intake device capable of impulse supercharging, which is applied to a multi-cylinder internal combustion engine including an independent passage per cylinder, in which one intake control valve is disposed in the independent passage for each of two cylinders having different opening timings of intake valves, and further, these intake control valves are connected in the same phase via a common valve shaft and driven by one actuator (Patent Document 1).

Patent Document 1: Japanese Patent Application Laid-Open No. 7-71277

### Disclosure of the Invention

### Problems to be Solved by the Invention

In an intake device disclosed in Patent Document 1, an intake control valve cannot be opened and closed at different timings with respect to two cylinders having different valve opening periods of intake valves. As a consequence, it is indispensable to equalize a passage length from the intake valve to the intake control valve or a surge tank in the cylinders in order to achieve a uniform inertia supercharging effect in the cylinders by performing impulse supercharging by the use of the intake device. In the same manner, also in the case where impulse supercharging is performed with respect to cylinders by using a single intake control valve, an inertia supercharging effect is unintentionally varied per cylinder unless the passage length from the intake control valve to each of the cylinders is equalized. In view of this, a degree of design freedom of an intake system is limited. Otherwise, an intake control valve is disposed on each of independent passages formed in cylinders, and further, the intake control valves need be independently controlled or a single intake control valve need be controlled at different opening/closing timings per cylinder, in order to achieve a uniform inertia supercharging effect in an intake system in which a passage length is different per cylinder. In such a case, the number of component parts is increased or the control becomes complicated.

In view of the above, an object according to the present invention is to provide an intake device for a multi-cylinder internal combustion engine, capable of suppressing variations in inertia supercharging effect per cylinder without any increase in number of component parts or complication of control even if passage lengths from a surge tank to intake valves are different from each other.

### Means for Solving the Problems

An intake device according to the present invention solves the above-described problems by comprising: an intake passage including an independent passage disposed in each of cylinders in a multi-cylinder internal combustion engine having the cylinders, to be opened and closed by an intake valve, a common passage connected to the independent passages, to be commonly used by the different cylinders, and a surge tank connected to one end of the common passage, which is configured such that at least two cylinders having different passage lengths from the intake valve to the surge tank through the independent passage and the common passage are included in the cylinders; an intake control valve which is adapted to open and close the common passage; and speed difference generating device that generates a speed difference between an intake pressure wave reaching the cylinder having a short passage length and an intake pressure wave reaching the cylinder having a long passage length when the common passage is opened by the intake control valve in a state in which the independent passage is opened by the intake valve.

Accordingly, in the intake device, the speed difference generating device can generate the speed difference between the intake pressure wave reaching the cylinder having the long passage length from the intake control valve and the intake pressure wave reaching the cylinder having the short passage length. For example, it is possible to readily reduce a shift of a timing, at which a maximum in-cylinder pressure is achieved, in the cylinders by increasing the speed of the intake pressure wave reaching the cylinder having the long passage length more than the speed of the intake pressure wave reaching the cylinder having the short passage length even if a valve opening timing by the intake control valve is not changed per cylinder. In other word, it is possible to suppress variations in inertia supercharging effect in the cylinders having the different passage lengths by actuating the single intake control valve disposed on the common passage without changing its valve opening timing per cylinder.

The speed difference generating device may be arbitrary as long as it can vary the speeds of the intake pressure wave in the cylinders having the different passage lengths. For example, the speed difference generating device may be configured such that the cross-sectional area of the independent passage disposed in the cylinder having the long passage length is made greater than that of the independent passage disposed in the cylinder having the short passage length. In accordance with the Helmholtz's resonance principle which has been well known as the principle of impulse supercharging, a vibration f of resonance in a system in which a pipe having a length L and a passage cross-sectional area A is connected to a volume unit having a volume V is expressed by f∝C×[(A/ (L×V))^{0.5}, wherein C represents a sonic speed. When this principle is applied to an intake system of an internal combustion engine, the volume unit corresponds to the cylinder in the internal combustion engine whereas the pipe corresponds to the intake passage. In accordance with the principle, in the case where a negative pressure generated in an intake passage of an internal combustion engine is released to a surge tank, the pressure is reversed to a positive pressure after a lapse of a half cycle (1/2 f) of the resonance after the release. As a consequence, it is possible to change a cycle of the resonance by changing the passage cross-sectional area without changing the passage length, thus it is possible to adjust a timing at which the negative pressure is reversed to the positive pressure. In other words, the speeds of the intake pressure wave reaching cylinders having different passage lengths can be adjusted by changing the passage cross-sectional area without changing the passage length.

According to this aspect, since the passage cross-sectional area of the independent passage disposed in the cylinder having the long passage length is greater than that in the cylinder having the short passage length, the speed of the intake pressure wave reaching the cylinder having the long passage length can be increased whereas the speed of the intake pressure wave reaching the cylinder having the short passage length can be decreased. As a result, it is possible to reduce a shift of a reach timing of the intake pressure wave with respect to each of the cylinders having the different passage lengths.

In this aspect, the independent passage includes an intake port opened to the cylinder and a connection for connecting the intake port to the common passage, and wherein the passage cross-sectional area of the intake port may be identical in both the cylinder having the long passage length and the cylinder having the short passage length. In this case, the intake cross-sectional area of the intake port is identical however the passage cross-sectional area of the connection is different in the cylinders having the different passage lengths. At a portion having the great passage cross-sectional area in the connection, the speed of the intake pressure wave becomes higher than that at a portion having a small cross-sectional area. However, there is no difference in passage cross-sectional area in the intake port near the intake valve in the cylinders. As a consequence, the speeds of the intake pressure wave having the difference at the connections in the cylinders are made uniform just before the intake valve. In this manner, the difference in intake flow introduced into the cylinders is hardly to be generated in the cylinders, thereby making it difficult to induce a difference in combustion status in the cylinders. Thus, it is possible to suppress variations in output torque or emission in the cylinders.

### Effect of the Invention

As described above, according to the present invention, the speed difference generating device can generate the speed difference between the intake pressure wave reaching the cylinder having the long passage length from the intake control valve and the intake pressure wave reaching the cylinder having the short passage length. For example, it is possible to readily reduce a shift of a timing, at which a maximum in-cylinder pressure is achieved, in the cylinders by increasing the speed of the intake pressure wave reaching the cylinder having the long passage length more than the speed of the intake pressure wave reaching the cylinder having the short passage length even if a valve opening timing by the intake control valve is not changed per cylinder. Consequently, it is possible to suppress variations in inertia supercharging effect in the cylinders having the different passage lengths by actuating the single intake control valve disposed on the common passage without changing its valve opening timing per cylinder.

### Brief Description of the Drawings

FIG. 1 is a view showing essential parts of an internal combustion engine, to which an intake device in an embodiment according to the present invention is applied.
FIG. 2 is a view schematically showing the internal combustion engine shown in FIG. 1, as viewed from the top.
FIG. 3 is a view schematically showing a comparative example, in which a passage area of an independent passage in an internal combustion engine is identical in each of cylinders.
FIG. 4 is a chart explanatory of operations of each of an intake valve and an intake control valve at the time of impulse supercharging and changes according to an in-cylinder pressure and a crank angle in each of cylinders #1 and #2 in embodiments and Comparative Examples.
FIG. 5 is a view schematically showing an internal combustion engine in a second embodiment, as viewed from the top.
FIG. 6 is a view schematically showing an internal combustion engine in a third embodiment, as viewed from the top.

### Best Modes for Carrying Out the Invention

### (First Embodiment)

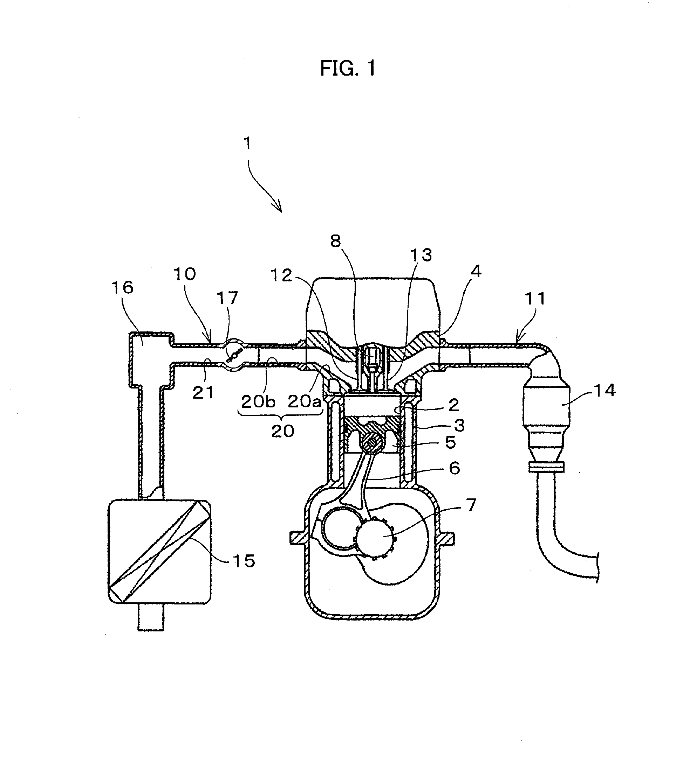

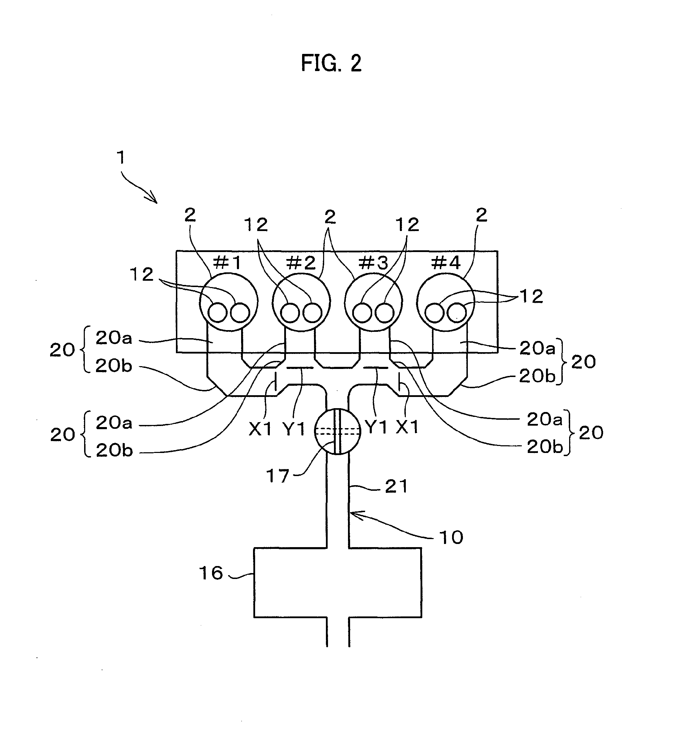

FIG. 1 is a view showing essential parts of an internal combustion engine, to which an intake device in an embodiment according to the present invention is applied. FIG. 2 is a view schematically showing the internal combustion engine shown in FIG. 1, as viewed from the top. An internal combustion engine 1 shown in FIGS. 1 and 2 is configured as a diesel engine, which is mounted on an automobile (not shown) as a driving power source. The internal combustion engine 1 includes a cylinder block 3 having four cylinders 2 aligned in one direction (only one shown in FIG. 1) and a cylinder head 4 fixed to the cylinder block 3 in such a manner as to close an opening of each of the cylinders 2. In the case where the cylinders 2 need be distinguished from each other in a description below, numbers #1 to #4 assigned to the cylinders 2, respectively, in an arrangement direction may be referred to (see FIG. 2). A piston 5 is inserted into each of the cylinders 2 in such a manner as to achieve a reciprocating motion. Each of the pistons 5 is connected to a crankshaft 7 via a connecting rod 6. One fuel injection valve 8 is disposed in each of the cylinders 2. The fuel injection valve 8 is fixed to the cylinder head 4 in such a manner that its tip is exposed to the inside of the cylinder 2.

To each of the cylinders 2 are connected an intake passage 10 and an exhaust passage 11. The intake passage 10 is opened and closed by two intake valves 12 disposed with respect to each of the cylinders 2 whereas the exhaust passage 11 is opened and closed by two exhaust valves 13 disposed with respect to each of the cylinders 2. The valves 12 and 13 are opened and closed by a valve mechanism (not shown) in synchronism with the rotation of the crankshaft 7. As a consequence, air is taken into the cylinder 2 through the intake passage 10 by opening the intake valves 12. An air-fuel mixture is formed inside of the cylinder 2 by injection of fuel by the fuel injection valve 8 in a state in which the air is taken into the cylinder 2. The air-fuel mixture is compressed by the piston 5, to be self-ignited, followed by combustion. A motion of the piston 5 due to the combustion is transmitted to the crankshaft 7 via the connecting rod 6, so that the crankshaft 7 is rotationally driven. Exhaust air after the combustion is led to the exhaust passage 11 by opening the exhaust valves 13, to be purified by a catalyst converter 14, to be then discharged to the atmosphere through a muffler (not shown). Additionally, the combustion order of the cylinders 2 is set to #1, #3, #4, and #2 in sequence.

In the intake passage10, there are provided an air cleaner 15 for filtering an intake air, a surge tank 16 having a predetermined volume enough to alleviate an intake interference and functioning as a part of the intake passage 10, and an intake control valve 17 interposed between the surge tank 16 and the intake valve 12. As shown also in FIG. 2, the intake passage 10 includes an independent passage 20 disposed in each of the cylinders 2 and a common passage 21 connected to each of the independent passages 20. Each of the independent passages 20 has an intake port 20a opened to the cylinder 2 and a connection 20b for connecting the intake port 20a to the common passage 21. The configuration of the independent passage 20 is varied per cylinder 2. In other words, with respect to the cylinders #1 and #4, a passage portion from the intake valve 12 to a position X1 functions as the independent passage 20: in contrast, with respect to the cylinders #2 and #3, a passage portion from the intake valve 12 to a position Y1 functions as the independent passage 20. The common passage 21 is commonly used by the different cylinders 2. That is to say, apassageportionupstream of the positions X1 and Y1 functions as the common passage 21.

As is obvious from FIG. 2, in the internal combustion engine 1, there exist in mixture the cylinders 2, in which the passage length from the intake valve 12 to the surge tank 16 through the independent passage 20 and the common passage 21 is identical to each other, and the cylinders 2, in which the passage length is different from each other. Specifically, in the internal combustion engine 1, the passage lengths of the cylinders #1 and #4 positioned at both ends in the arrangement direction of the cylinders 2 are identical to each other, and further, the passage lengths of the cylinders #2 and #3 interposed between the cylinders #1 and #4 are identical to each other. Moreover, the passage length of each of the cylinders #1 and #4 are different from the passage length of each of the cylinders #2 and #3. That is to say, in the internal combustion engine 1, the intake passage 10 is configured such that at least two out of the four cylinders 2 mutually have the different passage lengths. Here, the configuration of the intake passage 10 in the internal combustion engine 1 is laterally symmetric with each other, as shown in FIG. 2. Therefore, explanation will be made on the configuration of the intake passage 10 with respect to the left cylinders #1 and #2 having the passage lengths different from each other, and therefore, explanation will be appropriately omitted on the configuration of the intake passage 10 with respect to the right cylinders #3 and #4 in the following.

The cross-sectional area of the independent passage 20 disposed in the cylinder #1 having the long passage length is greater than that of the independent passage 20 disposed in the cylinder #2 having the short passage length. In other words, the cross-sectional area of passage differ between the cylinders #1 and #2. The reason the cross-sectional area is varied is in order to suppress a variations in inertia supercharging effect in the cylinders by equalizing the inertia supercharging effect of impulse supercharging, which is carried out by the operation of the intake control valve 17, between the cylinder 2 having the longpassage length and the cylinder 2 having the short passage length.

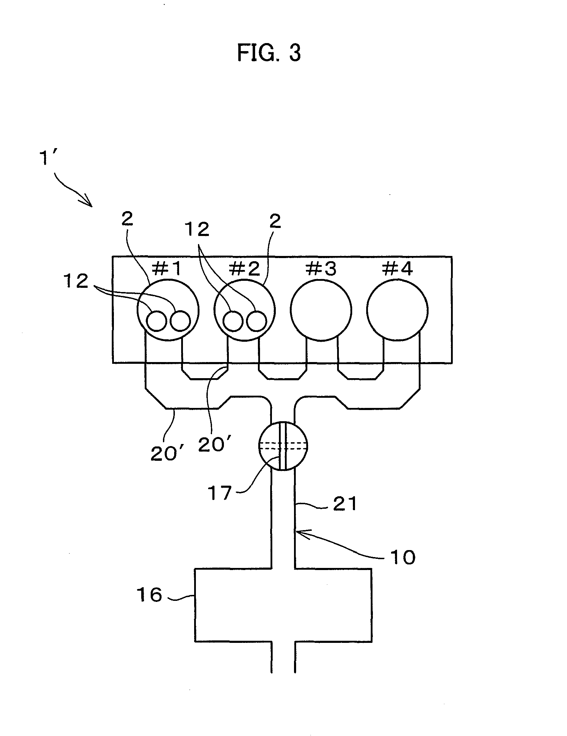

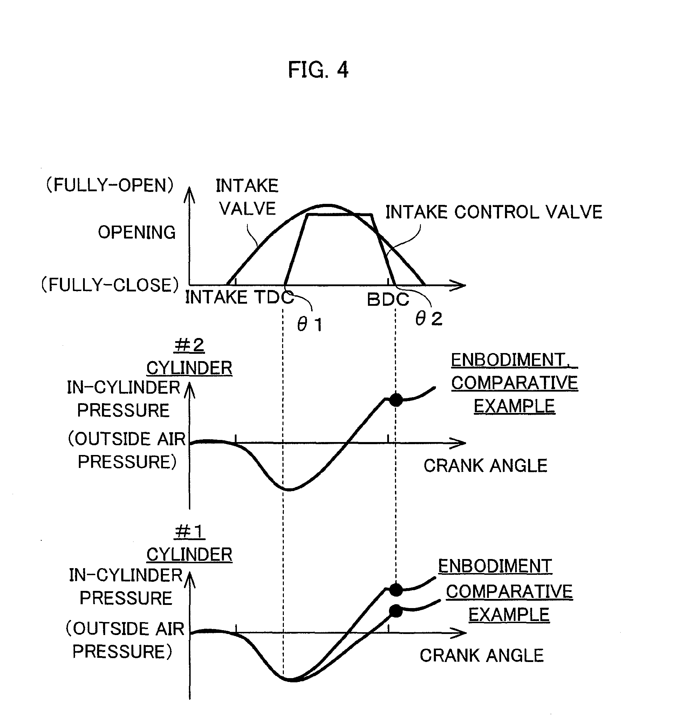

FIG. 3 is a view schematically showing Comparative Example 1' , in which the passage area of the independent passage 20 in the internal combustion engine 1 is identical in each of the cylinders 2. FIG. 4 is a chart explanatory of operations of each of the intake valve 12 and the intake control valve 17 at the time of impulse supercharging and changes according to an in-cylinder pressure and a crank angle in each of the cylinders #1 and #2 in the internal combustion engine 1 and Comparative Example 1'.

As shown in FIGS. 2 to 4, the intake valves 12 are started to be opened during impulse supercharging in a state in which the intake control valve 17 interposed between the intake valves 12 and the surge tank 16 is kept in a closure position indicated by a broken line. An in-cylinder pressure inside of the cylinder 2 becomes negative since the piston 5 descends with the progress of an intake stroke, and then, the negative pressure is gradually increased. When the intake control valve 17 is rapidly opened at a timing θ1 during the intake stroke, the negative pressure inside of the cylinder 2 is released, thereby generating an intake pressure wave inside of the intake passage 10. The intake pressure wave propagates inside of the intake passage 10. The speed of the intake pressure wave changes dependently on the passage length and the passage cross-sectional area based on the Helmholtz's resonance principle.

As illustrated in FIG. 4, with respect to the cylinder #2, both of the manifold lengths and the manifold cross-sectional areas in the internal combustion engine 1 and Comparative Example 1' are equal to each other. Thereby, the speeds of the intake pressure waves become equal to each other. Therefore, the intake control valve 17 can be closed at a timing θ2 at which the in-cylinder pressure becomes maximum. In contrast, with respect to the cylinder #1, the passage lengths in the internal combustion engine 1 and Comparative Example 1' are equal to each other, however the passage cross-sectional area in the internal combustion engine 1 is greater than that in Comparative Example 1'. Therefore, the speed of the intake pressure wave in the internal combustion engine 1 becomes higher than that in Comparative Example 1' in accordance with the Helmholtz's resonance principle. As a consequence, if the closure timing of the intake control valve 17 with respect to the cylinder #1 is identical to that with respect to the cylinder #2 in Comparative Example, the intake control valve 17 is unintentionally closed before the in-cylinder pressure of the cylinder #1 reaches a maximum value. In view of this, the inertia supercharging effect is varied in the cylinder #1 and the cylinder #2.

In contrast, the speed of the intake pressure wave which reaches the cylinder #1 having the long passage length is higher than that of the intake pressure wave which reaches the cylinder #2, thus covering a delay of a reach to the maximum value which is generated that the passage length of the cylinder #1 becomes greater than that of the cylinder #2. In other words, the timing at which the in-cylinder pressure is maximum can be substantially equal in the cylinders #1 and #2. As a result, a timing at which the in-cylinder pressure becomes maximum can be caught without changing an operational timing of the intake control valve 17 with respect to the cylinder #1 from an operational timing with respect to the cylinder #2 in the internal combustion engine 1, as illustrated in FIG. 4. In this manner, it is possible to suppress in inertia supercharging effect in the cylinders #1 and #2 without changing the operational timing of the intake control valve 17. The same holds true for the cylinders #3 and #4.

In the present embodiment, a difference in speed between the intake pressure waves is generated in the internal combustion engine 1 by increasing the speed of the intake pressure wave reaching the cylinder having the long passage length more than that reaching the cylinder 2 having the short passage length by the configuration of the intake passage 10. As a consequence, speed difference generating device according to the present invention is configured by increasing the passage cross-sectional area of the independent passage 20 disposed with respect to the cylinder #1 or #4 more than that disposed with respect to the cylinder #2 or #3.

### (Second Embodiment)

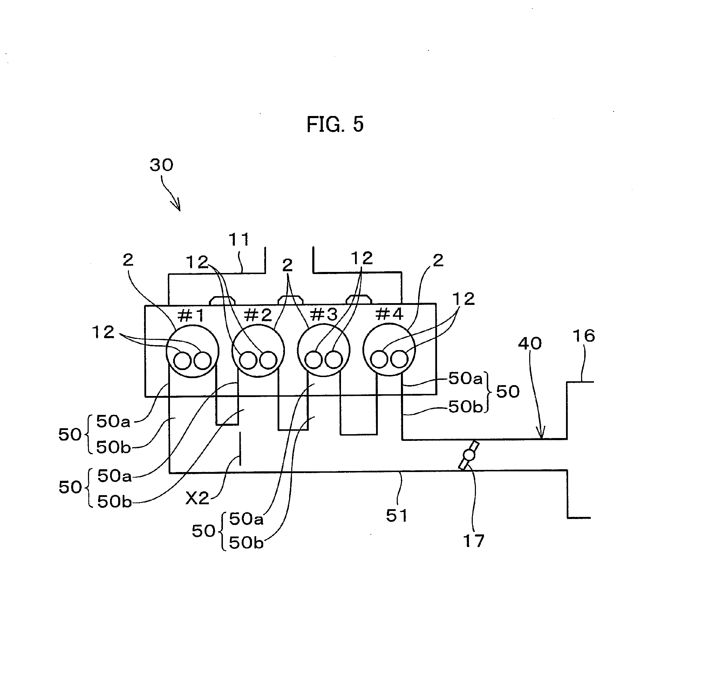

Next, a description will be given of a second embodiment of the present invention with reference to FIG. 5. Constituent elements common to those in the first embodiment are designated by the same reference numerals, and therefore, their description will be omitted below. FIG. 5 is a view schematically showing an internal combustion engine in the second embodiment, as viewed from the top. An internal combustion engine 30 in the present embodiment includes an intake passage 40, which has a configuration different from that in the first embodiment. Specifically, the intake passage 40 includes independent passages 50 disposed in cylinders 2, respectively, and a common passage 51 connected to each of the independent passages 50. The independent passage 50 includes an intake port 50a opened to the cylinder 2 and a connection 50b for connecting the intake port 50a to the common passage 51. The independent passages 50 are different in configuration from each other in cylinders #1 to #4. As for the cylinder #1, a passage portion from intake valves 12 to a position X2 functions as the independent passage 50: in contrast, as for the cylinders #2 to #4, portions from intake valves 12 to a position which is connected to the common passage 51 function as the independent passages 50. A passage portion upstream of the position X2 functions as the common passage 51.

As is obvious from FIG. 5, a passage length from the intake valves 12 to the surge tank 16 is varied in each of the cylinders #1 to #4. The cylinder #1 having a longest passage length has a largest passage cross-sectional area of the independent passage 50 whereas the cylinder #4 having a shortest passage length has a smallest passage cross-sectional area of the independent passage 50. In other words, as the passage length becomes longer, the passage cross-sectional area of the independent passage 50 of the cylinders 2 becomes gradually greater. As a consequence, a speed of an intake pressure wave by operation of an intake control valve 17 becomes higher as the passage cross-sectional area of the independent passage 50 becomes greater. Therefore, an inertia supercharging effect produced by impulse supercharging becomes uniform among the cylinders, thereby suppressing in inertia supercharging effect among the cylinders, like in the first embodiment. The intake passage 40 such configured as shown in FIG. 5 achieves speed difference generating device according to the present invention.

### (Third Embodiment)

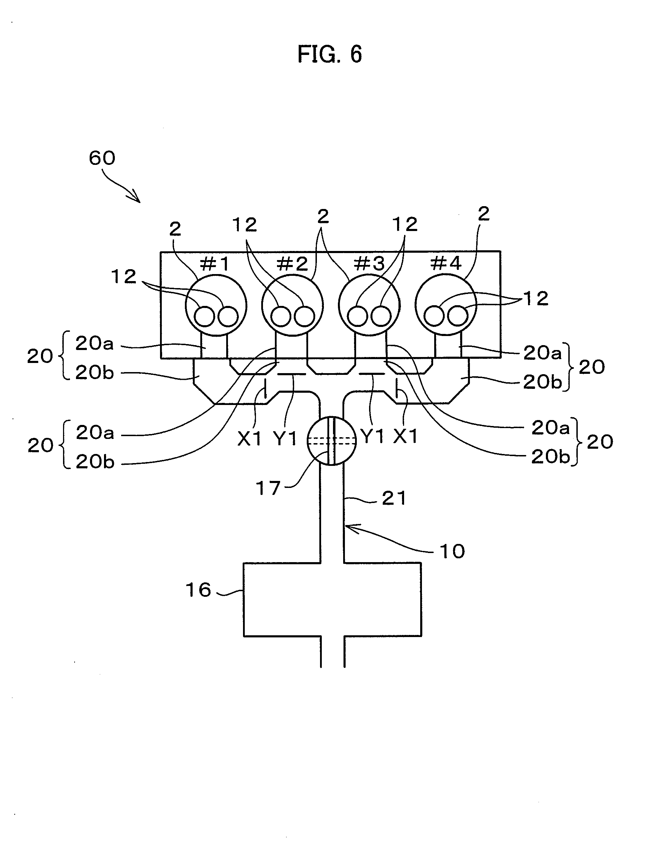

Subsequently, a description will be given of a third embodiment with reference to FIG. 6. FIG. 6 is a view schematically showing an internal combustion engine 60 in the third embodiment, as viewed from the top. The present embodiment belongs to an improvement of the first embodiment, wherein a basic configuration is the same as that in the first embodiment. An internal combustion engine 1 shown in FIG. 6 is featured in that a passage cross-sectional area of an intake port 20a in an independent passage 20 is the same as each other among cylinders #1 to #4. Specifically, the passage cross-sectional areas of the intake ports 20a are identical to each other in cylinders #1 and #4 having a long passage length and in cylinders #2 and #3 having a short passage length: in contrast, the passage cross-sectional areas at connections 20b are different fromeach other. A speed of an intake pressure wave becomes higher at a portion having a large passage cross-sectional area at the connection 20b than at a portion having a small passage cross-sectional area. However, the intake ports 20anear intake valves 12 do not have any difference in passage cross-sectional area among the cylinders. Therefore, the speeds of the intake pressure wave having the difference at the connections in the cylinders are made uniform just before the intake valves 12. As a consequence, the difference in intake flow introduced into the cylinders 2 is hardly to be generated in the cylinders, thereby making it difficult to generate the difference in a combustion status among the cylinders. Consequently, it is possible to suppress variations in output torque or emission in the cylinders in the internal combustion engine 60.

The present invention is not limited to the above-described embodiments, and therefore, can be carried out in various embodiments within the scope of the subj ect matter of the present invention. The type of internal combustion engine, to which the intake device according to the present invention is applicable, is not limited to the diesel engine. For example, the intake device according to the present invention may be applied to a gasoline engine of a port injection type or an in-cylinder direct injection type. Moreover, the intake device according to the present invention may be combined with a supercharger such as a turbocharger or a supercharger, which are not eliminated. Additionally, the intake device according to the present invention is applicable to an internal combustion engine having any number of cylinders or any cylinder arrangement type (a straight type, a V type, or the like).

## Claims

1. An intake device comprising:
an intake passage including an independent passage disposed in each of cylinders in a multi-cylinder internal combustion engine having the cylinders, to be opened and closed by an intake valve, a common passage connected to the independent passages, to be commonly used by the different cylinders, and a surge tank connected to one end of the common passage, which is configured such that at least two cylinders having different passage lengths from the intake valve to the surge tank through the independent passage and the common passage are included in the cylinders;
an intake control valve which is adapted to open and close the common passage; and
speed difference generating device that generates a speed difference between an intake pressure wave reaching the cylinder having a short passage length and an intake pressure wave reaching the cylinder having a long passage length when the common passage is opened by the intake control valve in a state in which the independent passage is opened by the intake valve.

2. The intake device according to claim 1, wherein the speed difference generating device is configured such that the cross-sectional area of the independent passage disposed in the cylinder having the long passage length is made greater than that of the independent passage disposed in the cylinder having the short passage length.

3. The intake device according to claim 2, wherein the independent passage includes an intake port opened to the cylinder and a connection for connecting the intake port to the common passage, and wherein the passage cross-sectional area of the intake port is identical in both the cylinder having the long passage length and the cylinder having the short passage length.
